# EUROPÄISCHE PATENTSCHRIFT

(11) **EP 3 492 782 B1**
(45) Veröffentlichungstag und Bekanntmachung des Hinweises auf die Patenterteilung: **05.08.2020**
(21) Anmeldenummer: 18208280.0
(22) Anmeldetag: 26.11.2018
(51) Int. Cl.: F16J 9/06

(54) **ÖLABSTREIFRING-FEDER FÜR EINEN ÖLABSTREIFRING UND ÖLABSTREIFRING**
OIL SCRAPER RING AND OIL SCRAPER RING SPRING FOR AN OIL SCRAPER RING
RESSORT À ANNEAU DÉFLECTEUR D'HUILE ET ANNEAU DÉFLECTEUR D'HUILE

(30) Priorität: 01.12.2017 DE 102017128578
(43) Veröffentlichungstag der Anmeldung: 05.06.2019
(73) Patentinhaber: Scherdel Innotec Forschungs- Und Entwicklungs GmbH, 95615 Marktredwitz (DE)
(72) Erfinder: Pöllath, Reiner, 95682 Brand (DE); Mielke, Peter, 95632 Wunsiedel (DE); Zimmermann, Maik, 95709 Tröstau (DE)
(74) Vertreter: Schmitt-Nilson Schraud Waibel Wohlfrom Patentanwälte Partnerschaft mbB

(56) Entgegenhaltungen:
- EP-B1- 2 703 695
- WO-A2-2007/010393
- US-A- 5 238 255

## Beschreibung

Die Erfindung betrifft einen Ölabstreifring, der eine Ölabstreifring-Feder, einen oberen und einen unteren Metallring aufweist und zum Montiert-Sein in einer Ölringnut eines Kolbens vorgesehen ist.

Ölabstreifringe kommen in Verbrennungsmotoren in einer Nut eines Kolbens des Verbrennungsmotors angeordnet zum Einsatz und haben die Aufgabe, im Betrieb überschüssiges Öl von einer Zylinderinnenwand abzustreifen.

Die EP 2 703 695 B1 zeigt eine Ölabstreifring-Feder mit mehreren oberen Bereichen und mehreren unteren Bereichen, die alternierend in einer Umfangsrichtung angeordnet sind, so dass sie einen Abstand in einer Axialrichtung und einen Abstand in der Umfangsrichtung haben. Verbindungsbereiche sind vorgesehen, die jeweils die benachbarten oberen und unteren Bereiche miteinander verbinden. Jeder der oberen und der unteren Bereiche weist einen Nasenabschnitt auf, der am inneren Umfangsende angeordnet ist und dazu ausgebildet ist, den jeweils anliegenden, oberen oder unteren Metallring radial nach außen zu drücken.

WO 2007/010393 zeigt einen Ölkontrollring für einen Verbrennungsmotor, der zwischen den Seitenwänden einer jeweiligen Nut eines Kolbens montiert werden soll und zwei Ringsegmente und einen ringförmigen Expander umfasst, der zwischen den beiden Ringsegmenten angeordnet ist und einen Stützkörper präsentiert, der eine Sitzebene für jedes Ringsegment definiert. Der Ring umfasst ferner mindestens einen Expanderabschnitt, der sich axial von dem Stützkörper des Expanders über wenigstens eine der Sitzebenen eines Ringsegments weg erstreckt, und wenigstens eine oberflächliche Unregelmäßigkeit, die in wenigstens einem der Ringsegmente vorgesehen ist und welche so bemessen ist, dass sie in der Dicke des jeweiligen Ringsegments angeordnet ist und wenigstens mit einem Expansionsabschnitt in Eingriff ist, um das Ringsegment in Bezug auf den Expander gegen verdrehen festzusetzenp.

Bei einem solchen, aus mehreren Bauteilen aufgebauten Ölabstreifring ergeben sich beim Betrieb unerwünschte Relativbewegungen zwischen diesen Bauteilen, und es kann zu Verschleiß führen.

Es ist daher eine Aufgabe der vorliegenden Erfindung, einen Ölabstreifring anzugeben, bei denen die Relativbewegungen zwischen den einzelnen Bauteilen weitgehend vermieden und der Verschleiß sowie Probleme beim Transport reduziert werden.

Diese Aufgabe wird durch den Gegenstand der unabhängigen Patentansprüche gelöst. Vorteilhafte Weiterbildungen ergeben sich aus den abhängigen Ansprüchen.

Eine erfindungsgemäße Ölabstreifring-Feder für einen Ölabstreifring, der die Ölabstreifring-Feder, einen oberen und einen unteren Metallring aufweist und zum Montiert-Sein in einer Ölringnut eines Kolbens vorgesehen ist, weist Folgendes auf: mehrere obere Bereiche und mehrere untere Bereiche, die alternierend in einer Umfangsrichtung angeordnet sind, so dass sie einen Abstand in einer Axialrichtung haben; Verbindungsbereiche, die jeweils die benachbarten oberen und unteren Bereiche miteinander verbinden; wobei jeder der oberen und der unteren Bereiche jeweils einen Nasenabschnitt, der am inneren Umfangsende angeordnet und dazu ausgebildet ist, den jeweils anliegenden, oberen oder unteren Metallring radial nach außen zu drücken, und einen Auflageabschnitt aufweist, der sich radial zwischen dem Nasenabschnitt und dem äußeren Umfangsende erstreckt und dazu ausgebildet ist, dass der jeweilige, obere oder untere Metallring darauf aufliegt bzw. daran anliegt; wobei an einem oberen und/oder an einem unteren Auflageabschnitt ein Verdrehsicherungsvorsprung vorgesehen ist, der sich nach oben aus der Ebene des oberen Auflageabschnitts bzw. nach unten aus der Ebene des unteren Auflageabschnitts erstreckt und eine Höhe hat, die kleiner gleich dem Abstand des oberen Endes des Nasenabschnitts zu der Ebene des oberen Auflageabschnitts bzw. kleiner gleich dem Abstand des unteren Endes des Nasenabschnitts zu der Ebene des unteren Auflageabschnitts ist, oder kleiner gleich der Dicke des auf den oberen Auflageabschnitt aufzulegenden bzw. des an den unteren Auflageabschnitt anzulegenden Metallrings ist. Der Verdrehsicherungsvorsprung ist als wenigstens ein aus dem oberen bzw. unteren Auflageabschnitt herausgebogener und ggf. teilweise herausgestanzter oder herausgeschnittener Materialabschnitt ausgebildet.

Ein erfindungsgemäßer Ölabstreifring zum Montiert-Sein in einer Ölringnut eines Kolbens, weist Folgendes auf: eine Ölabstreifring-Feder, einen oberen Metallring, der auf den Auflageabschnitten der oberen Bereiche der Ölabstreifring-Feder aufliegt und dessen radiale Innenfläche an den radialen Außenflächen der Nasenabschnitte der oberen Bereiche der Ölabstreifring-Feder anliegt; und einen unteren Metallring, der an den Auflageabschnitten der unteren Bereiche der Ölabstreifring-Feder anliegt und dessen radiale Innenfläche an der radialen Außenfläche der Nasenabschnitte der unteren Bereiche der Ölabstreifring-Feder anliegt; wobei wenigstens einer von dem oberen und dem unteren Metallring jeweils ein erstes und ein zweites Ende aufweisen, die einen Spalt dazwischen ausbilden; und wobei wenigstens einer von dem oberen und dem unteren Metallring so auf den Auflageabschnitten aufliegt bzw. daran anliegt, dass der Verdrehsicherungsvorsprung der Ölabstreifring-Feder in den Spalt zwischen dem ersten und dem zweiten Ende des Metallrings eingreift und so eine Verdrehsicherung zwischen der Ölabstreifring-Feder und Metallring bewirkt.

Wird ein Ölabstreifring mit der Ölabstreifring-Feder gebildet, ist diese somit zwischen dem oberen und dem unteren Metallring angeordnet und liegt axial an beiden an. Der obere Metallring liegt dabei auf den Auflageabschnitten des oberen Bereichs der Ölabstreifring-Feder auf, und der untere Metallring liegt an den Auflageabschnitten der unteren Bereiche der Ölabstreifring-Feder an. Ferner liegen die radiale Innenflächen des oberen und des unteren Metallrings bereichsweise jeweils an einer radialen Außenfläche eines der Nasenabschnitte an, wodurch die Metallringe zu der Ölabstreifring-Feder in radialer Richtung ausgerichtet sind. Insbesondere sind die Metallringe dadurch koaxial mit der Ölabstreifring-Feder ausgerichtet.

Im zusammengesetzten Zustand des Ölabstreifrings ist bei wenigstens einem von dem oberen und dem unteren Metallring ein erstes und ein zweites Ende mit einem Spalt dazwischen ausgebildet. In anderen Worten, wenigstens einer der Metallringe weist in Umfangsrichtung einen Spalt auf. Der Verdrehsicherungsvorsprung der Ölabstreifring-Feder greift in den Spalt ein und bewirkt so eine Verdrehsicherung zwischen der Ölabstreifring-Feder und dem Metallring. Der jeweilige Verdrehsicherungsvorsprung kann in Kontakt zu wenigstens einem Ende des anliegenden Metallrings stehen und somit eine Art Anschlag zu diesem bilden.

Eine erfindungsgemäße Ölabstreifringfeder sowie ein erfindungsgemäßer Ölabstreifring verhindern somit auf zuverlässige Weise eine Relativbewegung zwischen der Ölabstreifringfeder und den beiden Metallringen. Des Weiteren wird auch der Verschleiß der Ölabstreifringfeder und den Metallringen, der auch durch solche Relativbewegungen hervorgerufen wird, signifikant reduziert, und die Lebensdauer wird erhöht.

Weiterhin können die Metallringe in einer gewünschten Drehlage in Umfangsrichtung relativ zu der Ölabstreifring-Feder ausgerichtet angeordnet werden.

Die erfindungsgemäße Ölabstreifring-Feder bietet durch den Verdrehsicherungsvorsprung eine technisch besonders einfache Verdrehsicherung zwischen der Ölabstreifring-Feder und den an ihr anliegenden Metallringen des Ölabstreifrings.

Für einen solchen Ölabstreifring und für eine solche Ölabstreifringfeder können einfach aufgebaute und einfach und kostengünstig herstellbare Metallringe verwendet werden, die einen gleichbleibenden Querschnitt aufweisen, und nur einen Spalt zwischen ihren Enden ausbilden. Solche Metallringe haben insbesondere keine Vorsprünge und auch keine Einkerbungen.

Auch die erfindungsgemäße Ölabstreifringfeder ist einfach aufgebaut. Der Verdrehsicherungsvorsprung bzw. die Verdrehsicherungsvorsprünge können auf einfache Weise in dem jeweiligen oberen und/oder unteren Auflageabschnitt mithilfe aktueller Fertigungstechnologien gebildet werden, zum Beispiel durch Stanzen und Biegen eines Bereichs des Auflageabschnitts zu einem Verdrehsicherungsvorsprung.

Zylinderkolbenseitig sind keine Veränderungen vorzunehmen. Insbesondere müssen keine Einbuchtungen oder Einkerbungen im Zylinderkolben vorgesehen werden, um eine Relativbewegung zwischen Ölabstreifringfeder und den beiden Metallringen zu verhindern.

Dadurch, dass der Verdrehsicherungsvorsprung eine Höhe hat, die kleiner gleich dem Abstand des oberen Endes des Nasenabschnitts zu der Ebene des oberen Auflageabschnitts bzw. kleiner gleich dem Abstand des unteren Endes des Nasenabschnitts zu der Ebene des unteren Auflageabschnitts ist, oder kleiner gleich der Dicke des auf den oberen Auflageabschnitt aufzulegenden bzw. des an den unteren Auflageabschnitt anzulegenden Metallrings ist, wird sichergestellt, dass der Verdrehsicherungsvorsprung nicht mit der Ölringnut des Zylinderkolbens in Berührung kommt und dass hier keine unerwünschten Reibungseffekte wirken oder sogar Beschädigungen daraus resultieren.

Die Funktion des Ölabstreifrings, nämlich im Betrieb überschüssiges Öl von einer Zylinderinnenwand bzw. Zylinderlaufbuchsen-Innenwand abzustreifen, wird durch den erfindungsgemäßen Verdrehsicherungsvorsprung nicht beeinträchtigt.

Eine Ölabstreifring-Feder mit einem Verdrehsicherungsvorsprung, der als wenigstens ein aus dem oberen bzw. unteren Auflageabschnitt herausgebogener und ggf. teilweise herausgestanzter oder herausgeschnittener Materialabschnitt ausgebildet ist, ist einfach herstellbar. Ferner kann die Ölabstreifring-Feder damit insgesamt einstückig und ohne Fügeverfahrensschritte hergestellt werden.

Dieser Verdrehsicherungsvorsprung ist insbesondere aus einer kritischen Fläche der Ölabstreifring-Feder herausgebogen, an der normalerweise hohe Spannungen vorliegen.

Gemäß einer ersten Ausführungsform beträgt die Höhe des Verdrehsicherungsvorsprungs 25 - 100%, bevorzugt 50 - 95%, des Abstands des oberen Endes des Nasenabschnitts zu der Ebene des oberen Auflageabschnitts bzw. des Abstand des unteren Endes des Nasenabschnitts zu der Ebene des unteren Auflageabschnitts; oder 30 - 100%, bevorzugt 50 - 95%, der Dicke des auf den oberen Auflageabschnitt aufzulegenden bzw. des an den unteren Auflageabschnitt anzulegenden Metallrings. Hierdurch wird sichergestellt, dass der Verdrehsicherungsvorsprung nicht mit der Ölringnut des Zylinderkolbens in Berührung kommt und dass hier keine unerwünschten Reibungseffekte wirken oder sogar Beschädigungen daraus resultieren. Gleichzeitig wird jedoch in den angegebenen Höhenbereichen des Verdrehsicherungsvorsprungs ein sicheres Eingreifen des Verdrehsicherungsvorsprungs in den Spalt im oberen Metallring bzw. den Spalt im unteren Metallring erreicht. Der Verdrehsicherungsvorsprung ist dabei auch bei Scherkräften resultierend aus einer Verdrehkraft des oberen oder unteren Metallrings in Umfangsrichtung sicher im Spalt im oberen Metallring bzw. unteren Metallring angeordnet und rutscht nicht aus diesem heraus.

Gemäß einer weiteren Ausführungsform ist der Verdrehsicherungsvorsprung an einem radial äußeren Bereich des Auflageabschnitts angeordnet. Dies erlaubt eine einfache Herstellung der Ölabstreifring-Feder. Dabei kann radial zwischen dem Nasenabschnitt und dem Verdrehsicherungsvorsprung ein Spalt vorgesehen sein, sodass ein Öldurchfluss an dieser Stelle nicht behindert wird. Zudem kann bei der Formgebung des Verdrehsicherungsvorsprungs ein Werkzeug zum Halten des an den Verdrehsicherungsvorsprung angrenzenden Materials der Ölabstreifring-Feder eingreifen.

Gemäß einer weiteren Ausführungsform erstreckt sich der Verdrehsicherungsvorsprung senkrecht zu dem Auflageabschnitt, wodurch sich eine besonders zuverlässige Verdrehsicherung ergibt. Das Einleiten von axialen Verschiebekräften in den oberen Metallring bzw. unteren Metallrings wird zuverlässig vermieden.

Gemäß einer weiteren Ausführungsform beträgt die radiale Breite des Verdrehsicherungsvorsprungs 0,3 - 2,0 mm und/oder die umfangsmäßige Breite des Verdrehsicherungsvorsprungs beträgt 0,3 - 2,0 mm. Trotz dieser verhältnismäßig geringen Abmessungen wird eine zuverlässige Verdrehsicherung erreicht.

Gemäß einer ersten Ausführungsform des Ölabstreifrings greift der Verdrehsicherungsvorsprung an dem oberen Auflageabschnitt der Ölabstreifring-Feder in den Spalt zwischen dem ersten und dem zweiten Ende des oberen Metallrings ein und bewirkt so eine Verdrehsicherung zwischen Ölabstreifring-Feder und oberem Metallring; und/oder greift der Verdrehsicherungsvorsprung an dem unteren Auflageabschnitt der Ölabstreifring-Feder in den Spalt zwischen dem ersten und dem zweiten Ende des unteren Metallrings ein und bewirkt so eine Verdrehsicherung zwischen Ölabstreifring-Feder und unterem Metallring.

Dadurch wird eine Relativbewegung zwischen der Ölabstreifringfeder und den beiden Metallringen zuverlässig vermieden, und der resultierende Verschleiß der Ölabstreifringfeder und der Metallringen reduziert.

Gemäß einer weiteren Ausführungsform ist der Verdrehsicherungsvorsprung an dem oberen Auflageabschnitt umfangsmäßig versetzt zu dem Verdrehsicherungsvorsprung an dem unteren Auflageabschnitt angeordnet. Beispielsweise beträgt der Winkel zwischen dem Verdrehsicherungsvorsprung an dem oberen Auflageabschnitt und dem Verdrehsicherungsvorsprung an dem unteren Auflageabschnitt 10 bis 180°. Dadurch wird verhindert, dass der Spalt im oberen Metallring und der Spalt im unteren Metallring in einer axialen Verdrehlage der Metallringe zueinander in Umfangsrichtung gesehen zur Deckung kommen, was die Abdichtung verschlechtern würde. Aus dem umfangsmäßigen Versatz der Spalte der Metallringe ergeben sich Vorteile bezüglich der der Herstellung, der Handhabung und der Funktion des Ölabstreifrings.

Gemäß einer weiteren Ausführungsform hat der Spalt zwischen dem ersten und dem zweiten Ende des oberen bzw. unteren Metallrings eine umfangsmäßige Breite von 0,3 - 2,0 mm. In einen solchen Spalt kann der Verdrehsicherungsvorsprung, dessen Breite der Spaltbreite entspricht oder dessen Breite etwas kleiner ist als die Spaltbreite, eingreifen und so eine zuverlässige Verdrehsicherung bewirken.

Gemäß einer weiteren Ausführungsform füllt der Verdrehsicherungsvorsprung an dem oberen bzw. Auflageabschnitt der Ölabstreifring-Feder den Spalt zwischen dem ersten und dem zweiten Ende des oberen bzw. unteren Metallrings in umfangsmäßiger Breitenrichtung gesehen vollständig aus. Dadurch ergibt sich in Umfangsrichtung eine spielfreies Eingreifen und somit eine Arretierung des Verdrehsicherungsvorsprungs gegenüber dem jeweiligen Metallring. Damit können im Betrieb kleine Relativbewegungen zwischen den Metallringen und der Ölabstreifring-Feder in Umfangsrichtung der Ölabstreifring-Feder vermieden werden, was den Verschleiß an den Kontaktstellen zwischen der Ölabstreifring-Feder und dem daran anliegenden unteren und oberen Metallring verringert.

Gemäß einer weiteren Ausführungsform weist der obere und/oder der untere Metallring - in Umfangsrichtung gesehen - jeweils einen konstanten, vorsprungsfreien und vertiefungsfreien Querschnitt auf. Dadurch haben die Metallringe einfache Gestalt und können besonders einfach und kostengünstig hergestellt und schnell und einfach mit der Ölabstreifring-Feder zu einem Ölabstreifring zusammengesetzt werden.

Die Erfindung wird im Folgenden anhand von Ausführungsbeispielen unter Bezugnahme auf die beiliegenden Figuren näher erläutert.
Fig. 1 zeigt einen Ölabstreifring gemäß einem ersten Ausführungsbeispiel in einer schematischen perspektivischen Darstellung;
Fig. 2 zeigt eine vergrößerte Detailansicht des Ölabstreifrings aus Fig. 1 in einer schematischen perspektivischen Darstellung; und
Fig. 3 zeigt einen Ölabstreifring gemäß einem zweiten Ausführungsbeispiel in einer schematischen perspektivischen Darstellung.

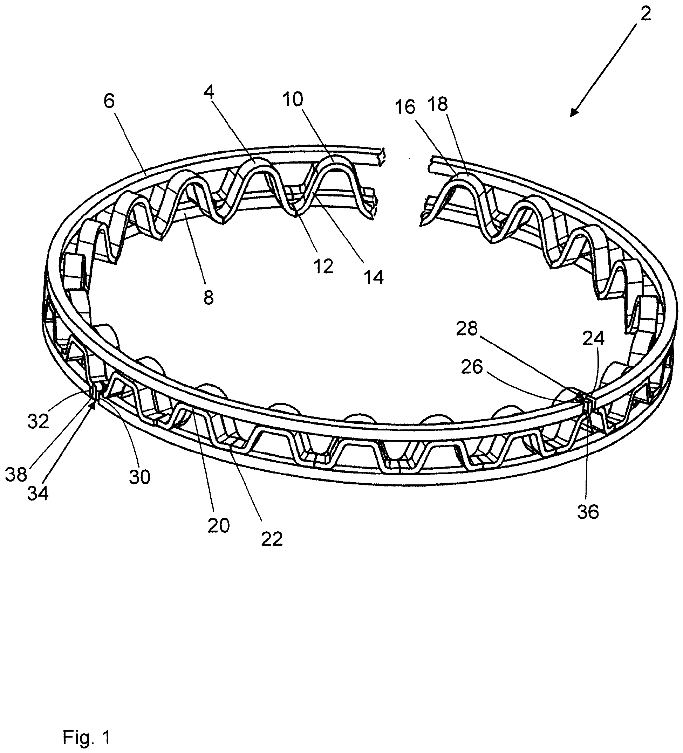

Fig. 1 zeigt einen Ölabstreifring 2 gemäß einem ersten Ausführungsbeispiel in einer schematischen perspektivischen Darstellung.

Der Ölabstreifring 2 umfasst eine Ölabstreifring-Feder 4, einen oberen Metallring 6, der im Bild oben auf der Ölabstreifring-Feder 4 aufliegt, und einen unteren Metallring 8, der im Bild unten an der Ölabstreifring-Feder 4 anliegt.

Den Ölabstreifring 2 möge man sich in einer Nut eines Zylinderkolbens des Verbrennungsmotors angeordnet vorstellen, und zwar so, dass der obere Metallring 6 mit seiner Oberseite an der oberen Wand der Kolbennut anliegt, dass der untere Metallring 8 mit seiner Unterseite an der unteren Wand der Kolbennut anliegt, und dass beide Metallringe 6 und 8 im Betrieb überschüssiges Öl von der Zylinderinnenwand bzw. Zylinderlaufbuchsen-Innenwand abstreifen. Der Zylinderkolben ist dabei innerhalb des Zylinders angeordnet und bewegt sich nach oben und unten. Das abgestreifte Öl gelangt durch die Öffnungen des Ölabstreifrings 2 in die Kolbennut und wird durch Bohrungen in dem Zylinderkolben zurückgeführt. Letzteres ist dem Fachmann bekannt und braucht hier nicht weiter erläutert zu werden.

Die Begriffe "radial" und "axial" werden nachfolgend auf die Symmetrieachse des Zylinderkolbens bezogen verstanden, die mit der Symmetrieachse des Ölabstreifrings 2 zusammenfällt.

Die Ölabstreifring-Feder 4 ist wellenförmig ausgebildet und weist mehrere obere Bereiche 10 und mehrere untere Bereiche 12 auf, die alternierend in einer Umfangsrichtung angeordnet sind einen wellenförmiger Verlauf haben, so dass jeweils benachbarte obere und untere Bereiche 10 und 12 einen Abstand in Axial- und Umfangsrichtung haben. Die Ölabstreifring-Feder 4 weist ferner Verbindungsbereiche 14 auf, welche die jeweils die benachbarten oberen Bereiche 10 und unteren Bereiche 12 miteinander verbinden. Die oberen Bereiche 10 können auch als Wellenberge und die unteren Bereiche 12 auch als Wellentäler bezeichnet werden. In Fig. 1 ist der wellenförmige Verlauf der Ölabstreifring-Feder 4 erkennbar, mit iterierenden Abfolge von oberem Bereich 10, Verbindungsbereich 14, unterem Bereich 12, Verbindungsbereich 14 u.s.w. Insgesamt verfügt die in Fig. 1 beispielhaft gezeigte Ölabstreifring-Feder 4 über 22 obere und untere Bereiche 10 und 12.

Jeder der oberen Bereiche 10 und der unteren Bereiche 12 weist jeweils einen Nasenabschnitt 16 auf, der am inneren Umfangsende der Ölabstreifring-Feder 4 angeordnet ist. Die Nasenabschnitte 16 enden, in axialer Richtung der Ölabstreifring-Feder gesehen, in einem oberen Ende des Nasenabschnitts 18. Das obere Ende des Nasenabschnitts 18 stellt dabei eine Art Scheitelpunkt des gewölbten Nasenabschnitts 16 in axialer Richtung dar.

Im zusammengesetzt dargestellten Zustand des Ölabstreifrings 2 ist erkennbar, dass der obere Metallring 6 und der untere Metallring 8 radial außen an den Nasenabschnitten 16 angeordnet sind. Der obere Metallring 6 liegt dabei mit seiner radialen Innenfläche an den radialen Außenflächen der Nasenabschnitte 16 der oberen Bereiche 10 der Ölabstreifring-Feder 4 an. Analog dazu liegt der untere Metallring 8 mit seiner radialen Innenfläche an den radialen Außenflächen der Nasenabschnitte 16 der unteren Bereiche 12 der Ölabstreifring-Feder 4 an. Im Betrieb des Ölabstreifrings 2 drücken die Nasenabschnitte 16 den jeweils daran anliegenden oberen Metallring 6 bzw. unteren Metallring 8 radial nach außen.

Ferner weist jeder der oberen Bereiche 10 einen oberen Auflageabschnitt 20 und jeder der unteren Bereiche 12 jeweils einen unteren Auflageabschnitt 22 auf, die sich radial zwischen dem radial äußeren Ende des Nasenabschnitts 16 und dem äußeren Umfangsende der Ölabstreifring-Feder 4 erstrecken. Die oberen Auflageabschnitte 20 liegen in einer oberen Radialebene, und ebenso liegen die unteren Auflageabschnitte 22 in einer unteren Radialebene. Der obere Metallring 6 liegt auf den oberen Auflageabschnitten 20 auf, und der untere Metallring 8 liegt an den unteren Auflageabschnitten 22 an.

Der obere Metallring 6 weist ein erstes Ende 24 und ein dazu beabstandetes zweites Ende 26 auf, die einen Spalt 28 dazwischen ausbilden. Ebenso weist der untere Metallring 8 weist ein erstes Ende 30 und ein dazu beabstandetes zweites Ende 32 auf, die einen Spalt 34 dazwischen ausbilden.

An einem der oberen Auflageabschnitte 20 und an einem der unteren Auflageabschnitte 22 ist jeweils ein Verdrehsicherungsvorsprung 36 vorgesehen, die sich nach oben aus der oberen Radialebene des oberen Auflageabschnitts 20 bzw. nach unten aus der unteren Radialebene des unteren Auflageabschnitts 22 erstrecken und in den Spalt 28 im auf der Ölabstreifring-Feder 4 aufliegenden oberen Metallring 6 bzw. in den Spalt 34 im an der Ölabstreifring-Feder 4 anliegenden unteren Metallring 8 eingreifen. Dadurch, dass jeweils ein oberer bzw. unterer Verdrehsicherungsvorsprung 36, 38 der Ölabstreifring-Feder 4 in den Spalt 28 im oberen Metallring 6 und in den Spalt 34 im unteren Metallring 8 eingreift, wird sowohl eine Verdrehsicherung zwischen der Ölabstreifring-Feder 4 und dem oberen Metallring 6 als auch zwischen der Ölabstreifring-Feder 4 und dem unteren Metallring 8 bewirkt. Damit werden der obere Metallring 6 und der untere Metallring 8 an einem Verdrehen um ihre Symmetrieachse relativ zu der Ölabstreifring-Feder 4 gehindert.

Die umfangsmäßige Position des oberen Verdrehsicherungsvorsprungs 36 und des Spalt 28 im oberen Metallring 6 ist umfangsmäßig beabstandet von der Position des unteren Verdrehsicherungsvorsprungs 36 und des Spalts 34 im unteren Metallring 8, und zwar im vorliegenden, nicht einschränkenden Ausführungsbeispiel in etwa um 90°.

Mit der in dem vorliegenden Ausführungsbeispiel beschriebenen Ölabstreifring-Feder 4 mit den Verdrehsicherungsvorsprüngen 36 und 38 und für den Ölabstreifring 2, der diese Ölabstreifring-Feder 4 sowie den oberen Metallring 6 und den unteren Metallring 8 umfasst, wird eine Relativbewegung zwischen den Metallringen 6 und 8 und der Ölabstreifringe-Feder 4 auf ein Minimum reduziert oder sogar ganz vermieden. Die Funktion wird verbessert, der Verschleiß wird aufgrund der signifikant reduzierten Reibung deutlich vermindert, und somit wird die Lebensdauer erhöht.

Durch die Ölabstreifring-Feder 4 werden im in die Kolbennut des Zylinderkolbens eingesetzten Zustand des Ölabstreifrings die oberen und unteren Metallringe 6 und 8 gegen die Zylinderinnenwand gedrückt gedrückt, um so ein wirkungsvolles Abstreifen von Öl von der Zylinderinnenwand zu erreichen.

Im hinteren Bereich des Ölabstreifrings 2 ist schematisch eine Unterbrechung des oberen Metallrings 6, des unteren Metallrings 8 und der Ölabstreifring-Feder 4 gezeigt. Diese Unterbrechung ist der Darstellung geschuldet. In der Praxis sind der obere Metallring 6 und der untere Metallring 8 in diesem Bereich durchgehend.

Die Enden der Ölabstreifring-Feder 4 können insbesondere aneinander liegen, damit die Ölabstreifring-Feder 4 eine Federkraft nach außen ausüben kann.

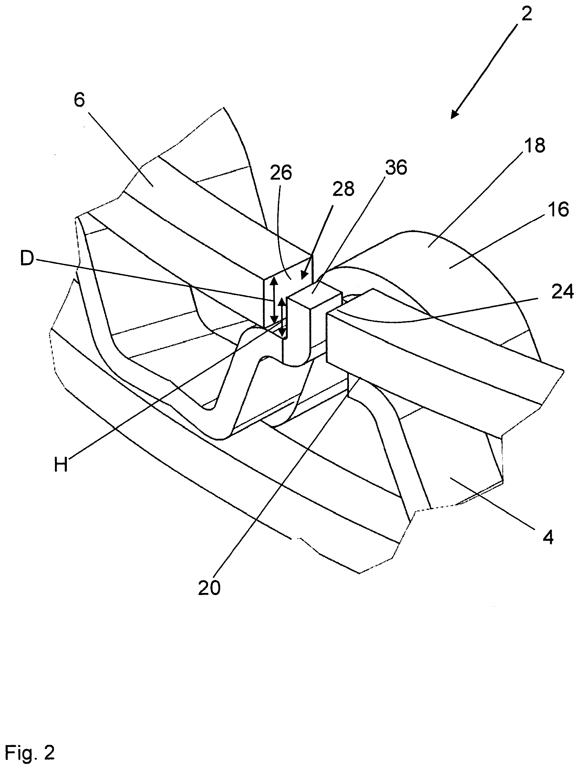

Fig. 2 zeigt eine Detailansicht des Ölabstreifrings 2 in einer schematischen perspektivischen Darstellung.

Die verwendeten Bezugszeichen entsprechen denen von Fig. 1. Zentral im Bild ist der Spalt 28 im oberen Metallring 6 des Ölabstreifrings 2 dargestellt, der zwischen dem ersten Ende 24 des oberen Metallrings 6 und dem zweiten Ende 26 des oberen Metallrings 6 ausgebildet ist. Im Bild ist hinter dem oberen Metallring 6 der Nasenabschnitt 16 erkennbar, der sich bogenförmig bis zu einem in axialer Richtung der Ölabstreifring-Feder 4 gesehen höchsten oberen Ende 18 erhebt. Der Nasenabschnitt 16 stützt den außen daran anliegenden oberen Metallring 6 in radialer Richtung der Ölabstreifring-Feder 4 ab.

Der Verdrehsicherungsvorsprung 36 der Ölabstreifring-Feder 4 ragt von unten her in den Spalt 28 des auf dem oberen Auflageabschnitt 20 der Ölabstreifring-Feder 4 aufliegenden oberen Metallrings 6 herein und greift somit in diesen ein.

Bei diesem Ausführungsbeispiel weist der Verdrehsicherungsvorsprung 36 eine Höhe H auf, die, in axialer Richtung des Ölabstreifrings 2 gesehen, kleiner der Dicke D des auf dem oberen Auflageabschnitt 20 aufliegenden oberen Metallrings 6 ist. Die Höhe H ist dabei in axialer Richtung der Ölabstreifring-Feder 4 ausgehend von der oberen Radialebene des oberen Auflageabschnitts 20 der Ölabstreifring-Feder 4 bis zu dem axialen Ende des Verdrehsicherungsvorsprungs 36 gemessen. Analog dazu ist die Dicke D gemessen von der oberen Radialebene des oberen Auflageabschnitts 20 der Ölabstreifring-Feder 4 bis zu der axialen Oberseite des oberen Metallrings 6.

Dadurch, dass die Höhe H geringer als die Dicke D ist, berührt der am weitesten in den Spalt 28 des oberen Metallrings 6 hinein ragende Teil des Verdrehsiche2 in die Kolbennut eingebracht ist.. Die Höhe H des Verdrehsicherungsvorsprungs 36 kann dabei 30 - 100% der Dicke D betragen.

Wie in Figur 2 gut zu sehen ist, ist die umfangsmäßige Breite des Verdrehsicherungsvorsprungs 36 etwas geringer als die Breite des Spalt 28 zwischen den beiden Enden 24 und 26 des oberen Metallrings 6, so dass zwischen der umfangsmäßig vorderen Endfläche 26 des Verdrehsicherungsvorsprungs 36 und der Endfläche 26 des oberen Metallrings 6 ein geringer Zwischenraum vorhanden ist. Ebenso ist zwischen der umfangsmäßig hinteren Endfläche des Verdrehsicherungsvorsprungs 36 und der Endfläche 24 des oberen Metallrings 6 ein geringer Zwischenraum vorhanden.

Durch das Eingreifen des Verdrehsicherungsvorsprungs 36 in den Spalt 28 wird die Möglichkeit zu einer Relativbewegung zwischen dem oberen Metallring 6 und der Ölabstreifring-Feder 4 auf ein Minimum reduziert, nämlich auf die sich durch den oben genannten Zwischenraum ergebende Strecke. Je geringer dieser Zwischenraum bemessen ist, desto geringer ist die Möglichkeit zur Relativbewegung.

Der Verdrehsicherungsvorsprung 36 erstreckt sich aus der oberen Radialebene des oberen Auflageabschnitts 20 im Wesentlichen senkrecht nach oben. Der Verdrehsicherungsvorsprung 36 ist dabei als aus dem oberen Auflageabschnitt 20 bereichsweise herausgeschnittener oder herausgestanzter und nach oben gebogener integraler Abschnitt des oberen Auflageabschnitts 20 ausgebildet.

Der Verdrehsicherungsvorsprung 36 ist nur an einem radial äußeren Bereich des oberen Auflageabschnitts 20 angeordnet. Zwischen dem umfangsmäßig inneren Ende des Verdrehsicherungsvorsprungs 36 und der umfangsmäßig außen gelegenen Außenfläche des Nasenabschnitts 16 ist ein Verdrehsicherungsvorsprungfreier Zwischenraum angeordnet. Dadurch wird an dieser Stelle der Ölschluss verbessert.

Obgleich in Figur 2 nur der obere Verdrehsicherungsvorsprung 36 an dem oberen Auflageabschnitt 20, der in den Spalt 28 zwischen den beiden Enden 24 und 26 des oberen Metallrings 6 eingreift, gezeigt und beschrieben ist, trifft diese Offenbarung in analoger Weise auch auf den in Figur 1 gezeigten unteren Verdrehsicherungsvorsprung 38 an dem unteren Auflageabschnitt 22 zu, der in den Spalt 34 im unteren Metallring 8 zwischen dessen ersten Ende 30 und dessen zweiten Ende 32 eingreift. Zur Vermeidung von Wiederholungen wird dieser untere Verdrehsicherungsvorsprung 38 nicht noch einmal im Einzelnen beschrieben.

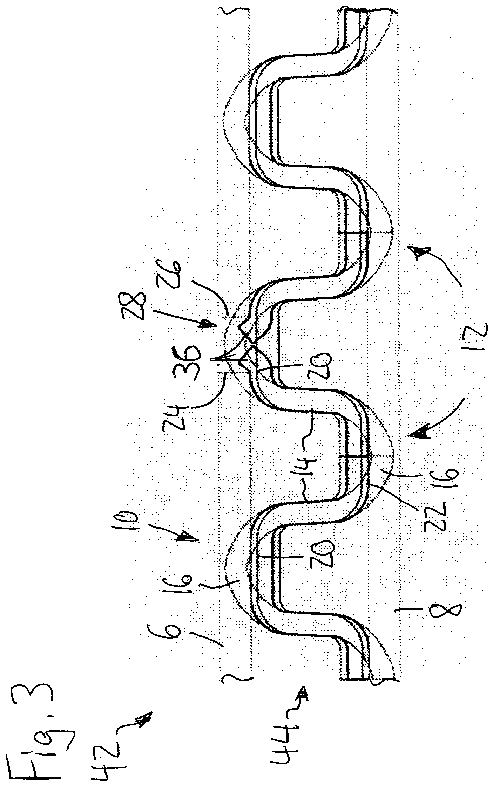

Figur 3 zeigt einen Ölabstreifring 42 gemäß einem zweiten Ausführungsbeispiel in einer schematischen perspektivischen Darstellung.

Der Ölabstreifring 42 umfasst einen oberen Metallring 6 und einen unteren Metallring 8, die identisch zu den Metallringen 6 und 8 des ersten Ölabstreifrings 2 aus Fig. 2 ausgebildet sind. Auch die Ölabstreifring-Feder 44 entspricht, mit Ausnahme der Ausbildung des oberen Verdrehsicherungsvorsprungs 36 und des unteren Verdrehsicherungsvorsprungs (nicht gezeigt), identisch der Ölabstreifring-Feder 4 aus den Figuren 1 und 2.

Gleiche Elemente sind mit den gleichen Bezugszeichen gekennzeichnet und werden hier nicht noch einmal erläutert.

Wiederum liegt der obere Metallring 6 mit seiner Unterseite bereichsweise auf den oberen Auflageabschnitten 20 auf, und er liegt mit seiner radialen Innenfläche bereichsweise an den radialen Außenflächen der Nasenabschnitte 16 der oberen Bereiche 10 der Ölabstreifring-Feder 44 an. Analog dazu liegt der untere Metallring 8 mit seiner Oberseite bereichsweise an den unteren Auflageabschnitten 22 an, und er liegt mit seiner radialen Innenfläche bereichsweise an den radialen Außenflächen der Nasenabschnitte 16 der unteren Bereiche 12 der Ölabstreifring-Feder 42 an.

Wie bei dem ersten Ölabstreifring 2 aus den Figuren 1 und 2, greifen auch bei dem zweiten Ölabstreifring 42 ein oberer Verdrehsicherungsvorsprung 36 in einen Spalt 28 zwischen den Endflächen 24 und 26 des oberen Metallrings 6 ein, und ebenso greift ein unterer Verdrehsicherungsvorsprung in einen Spalt zwischen Endflächen des unteren Metallrings 8 ein, wobei letzteres hier zur Vereinfachung nicht dargestellt ist.

Der obere Verdrehsicherungsvorsprung 36 ist nun in Form von zwei nach oben gebogenen Auflageabschnittsenden ausgeführt. Diese sind dadurch gebildet worden, indem einer der oberen Auflageabschnitte 20 entlang einer radial durch seine Mitte verlaufenden Ebene, zumindest bereichsweise durch aktuelle Fertigungstechnologien durchtrennt worden ist, zum Beispiel durch Schneiden oder Stanzen. Die angrenzenden Stirnflächen-Enden sind in diesem oberen Auflageabschnitt 20 von unten nach oben gebogen worden, so dass sich diese Stirnflächen-Enden ein Stück weit in den Spalt 28 erstrecken. Wie in Figur 3 dargestellt, bilden die Stirnflächen-Enden des oberen Auflageabschnitts 20 einen Winkel von 30 bis 90 Grad zu der oberen Radialebene, in welcher die oberen Auflageabschnitte 20 liegen, aus, und die oberen Kanten der nach oben gebogenen oberen Auflageabschnittsenden liegen etwa in Höhe von 30 bis 100 %, bezogen auf die Materialdicke des oberen Metallrings 6 ausgehend von der oberen Radialebene der oberen Auflageabschnitte 20.

Wiederum trifft die Offenbarung des oberen Verdrehsicherungsvorsprungs 36 in Figur 3 in analoger Weise auch auf den nicht gezeigten unteren Verdrehsicherungsvorsprung zu, der in den Spalt 34 im unteren Metallring 8 zwischen dessen ersten Ende 30 und dessen zweiten Ende 32 eingreift. Zur Vermeidung von Wiederholungen wird dieser untere Verdrehsicherungsvorsprung nicht noch einmal im Einzelnen beschrieben.

Die Vorteile der Ölabstreifring-Feder 44 mit dem gemäß Figur 3 ausgebildeten oberen Verdrehsicherungsvorsprung 36 und dem analog dazu ausgebildeten unteren Verdrehsicherungsvorsprung sowie des Ölabstreifrings 42 der die Ölabstreifring-Feder 44, den oberen Metallring 6 und den unteren Metallring 8 umfasst, entsprechen den mit Bezug auf die Figuren 1 und 2 sowie im allgemeinen Teil der vorliegenden Patentanmeldung angegebenen Vorteilen. Diese werden zur Vermeidung von Wiederholungen hier nicht noch einmal erläutert.

Gemäß einer weiteren Ausführungsform, die sowohl für das Ausführungsbeispiel der Figuren 1 und 2 als auch das Ausführungsbeispiel der Figur 3 zutrifft, kann die obere oder die untere Radialebene, in welcher die oberen bzw. unteren Auflageabschnitte 20, 22 liegen, radial nach außen ansteigen oder abfallen und somit eine Steigung aufweisen. Bevorzugt ist eine Steigung der oberen Radialebene der oberen Auflageabschnitte 20 radial nach außen gesehen und ein Abfallen der unteren Radialebene der unteren Auflageabschnitte 22, jeweils wiederum nach außen gesehen.

Zwischen den oberen/unteren Auflageabschnitten 29, 22 und dem jeweiligen Nasenabschnitt 16 können zudem für einen verbesserten Öldurchfluss Öldurchlassöffnungen ausgebildet sein.

Der gemäß den Ausführungsbeispielen der Figuren 1 bis 3 ausgebildete obere Verdrehsicherungsvorsprung 36 und ebenso der gemäß den Ausführungsbeispielen der Figuren 1 bis 3 ausgebildete untere Verdrehsicherungsvorsprung 38 können auch als Ausklinkung bezeichnet werden.

### Bezugszeichenliste

- 2: Ölabstreifring
- 4: Ölabstreifring-Feder
- 6: oberer Metallring
- 8: unterer Metallring
- 10: obere Bereiche
- 12: untere Bereiche
- 14: Verbindungsbereiche
- 16: Nasenabschnitt
- 18: oberes Ende des Nasenabschnitts
- 20: oberer Auflageabschnitt
- 22: unterer Auflageabschnitt
- 24: erstes Ende des oberen Metallrings
- 26: zweites Ende des oberen Metallrings
- 28: Spalt im oberen Metallring
- 30: erstes Ende des unteren Metallrings
- 32: zweites Ende des unteren Metallrings
- 34: Spalt im unteren Metallring
- 36: oberer Verdrehsicherungsvorsprung
- 38: unterer Verdrehsicherungsvorsprung
- H: Höhe des Verdrehsicherungsvorsprungs
- D: Dicke des oberen bzw. unteren Metallrings
- 42: Ölabstreifring
- 44: Ölabstreifring-Feder

## Patentansprüche

1. Ölabstreifring (2) zum Montiert-Sein in einer Ölringnut eines Kolbens, aufweisend:
eine Ölabstreifring-Feder (4), wobei die Ölabstreifring-Feder (4) Folgendes aufweist:
mehrere obere Bereiche (10) und mehrere untere Bereiche (12), die alternierend in einer Umfangsrichtung angeordnet sind, so dass sie einen Abstand in einer Axialrichtung haben;
Verbindungsbereiche (14), die jeweils die benachbarten oberen und unteren Bereiche (10, 12) miteinander verbinden;
wobei jeder der oberen und der unteren Bereiche (10, 12) jeweils einen Nasenabschnitt (16), der am inneren Umfangsende angeordnet und dazu ausgebildet ist, einen jeweils anliegenden, oberen oder unteren Metallring (6, 8) radial nach außen zu drücken, und einen Auflageabschnitt (20, 22) aufweist, der sich radial zwischen dem Nasenabschnitt (16) und dem äußeren Umfangsende erstreckt und dazu ausgebildet ist, dass der jeweilige, obere oder untere Metallring (6, 8) darauf aufliegt bzw. daran anliegt;
wobei an einem oberen und/oder an einem unteren Auflageabschnitt (20, 22) ein Verdrehsicherungsvorsprung (36, 38) vorgesehen ist, der sich nach oben aus der Ebene des oberen Auflageabschnitts (20) bzw. nach unten aus der Ebene des unteren Auflageabschnitts (22) erstreckt und eine Höhe (H) hat, die kleiner gleich dem Abstand des oberen Endes des Nasenabschnitts (16) zu der Ebene des oberen Auflageabschnitts (20) bzw. kleiner gleich dem Abstand des unteren Endes des Nasenabschnitts (16) zu der Ebene des unteren Auflageabschnitts (22) ist, oder kleiner gleich der Dicke (D) des auf den oberen Auflageabschnitt (20) aufzulegenden bzw. des an den unteren Auflageabschnitt (22) anzulegenden Metallrings (6, 8) ist; und
wobei der Verdrehsicherungsvorsprung (36, 38) als wenigstens ein aus dem oberen bzw. unteren Auflageabschnitt (20, 22) herausgebogener und ggf. teilweise herausgestanzter oder herausgeschnittener Materialabschnitt ausgebildet ist;
einen oberen Metallring (6), der auf den Auflageabschnitten (20) der oberen Bereiche (10) der Ölabstreifring-Feder (4) aufliegt und dessen radiale Innenfläche an den radialen Außenflächen der Nasenabschnitte (16) der oberen Bereiche der Ölabstreifring-Feder (4) anliegt; und
einen unteren Metallring (8), der an den Auflageabschnitten (22) der unteren Bereiche (12) der Ölabstreifring-Feder (4) anliegt und dessen radiale Innenfläche an der radialen Außenfläche der Nasenabschnitte (16) der unteren Bereiche (12) der Ölabstreifring-Feder (4) anliegt;
wobei wenigstens einer von dem oberen und dem unteren Metallring (6, 8) jeweils ein erstes und ein zweites Ende (24, 26, 30, 32) aufweisen, die einen Spalt (28, 34) dazwischen ausbilden; und
wobei wenigstens einer von dem oberen und dem unteren Metallring (6, 8) so auf den Auflageabschnitten (20, 22) aufliegt bzw. daran anliegt, dass der Verdrehsicherungsvorsprung (36, 38) der Ölabstreifring-Feder (4) in den Spalt (28, 34) zwischen dem ersten und dem zweiten Ende (24, 26, 30, 32) des Metallrings (6, 8) eingreift und so eine Verdrehsicherung zwischen Ölabstreifring-Feder (4) und Metallring (6, 8) bewirkt.

2. Ölabstreifring (2) nach Anspruch 1,
wobei die Höhe (H) des Verdrehsicherungsvorsprungs 25 - 100%, bevorzugt 50 - 95%, des Abstands des oberen Endes des Nasenabschnitts (16) zu der Ebene des oberen Auflageabschnitts (20) bzw. des Abstand des unteren Endes des Nasenabschnitts (16) zu der Ebene des unteren Auflageabschnitts (22) ist; oder
wobei die Höhe (H) des Verdrehsicherungsvorsprungs 30 - 100%, bevorzugt 50 - 95%, der Dicke (D) des auf den oberen Auflageabschnitt (20) aufzulegenden bzw. des an den unteren Auflageabschnitt (22) anzulegenden Metallrings (6, 8) ist.

3. Ölabstreifring (2) nach Anspruch 1 oder 2,
wobei der Verdrehsicherungsvorsprung (36, 38) an einem radial äußeren Bereich des Auflageabschnitts (20, 22) angeordnet ist.

4. Ölabstreifring (2) nach einem der vorhergehenden Ansprüche,
wobei sich der Verdrehsicherungsvorsprung (36, 38) senkrecht zu dem Auflageabschnitt (20, 22) erstreckt.

5. Ölabstreifring (2) nach einem der vorhergehenden Ansprüche,
wobei die radiale Breite des Verdrehsicherungsvorsprungs (36, 38) 0,3 - 2,0 mm beträgt; und/oder
wobei die umfangsmäßige Breite des Verdrehsicherungsvorsprungs (36, 38) 0,3 - 2,0 mm beträgt.

6. Ölabstreifring (2) nach einem der vorherigen Ansprüche,
wobei der Verdrehsicherungsvorsprung (36) an dem oberen Auflageabschnitt (20) der Ölabstreifring-Feder (4) in den Spalt (28) zwischen dem ersten und dem zweiten Ende (24, 26) des oberen Metallrings (6) eingreift und so eine Verdrehsicherung zwischen Ölabstreifring-Feder und oberem Metallring bewirkt; und/oder
wobei der Verdrehsicherungsvorsprung (38) an dem unteren Auflageabschnitt (22) der Ölabstreifring-Feder (4) in den Spalt (34) zwischen dem ersten und dem zweiten Ende (30, 32) des unteren Metallrings (8) eingreift und so eine Verdrehsicherung zwischen Ölabstreifring-Feder (4) und unterem Metallring (8) bewirkt.

7. Ölabstreifring (2) nach Anspruch 6,
wobei der Verdrehsicherungsvorsprung (36) an dem oberen Auflageabschnitt (20) umfangsmäßig versetzt zu dem Verdrehsicherungsvorsprung (38) an dem unteren Auflageabschnitt (22) angeordnet ist; und/oder
wobei der Winkel zwischen dem Verdrehsicherungsvorsprung (36) an dem oberen Auflageabschnitt (20) und dem Verdrehsicherungsvorsprung (38) an dem unteren Auflageabschnitt (22) 10 bis 180° beträgt.

8. Ölabstreifring (2) nach einem der vorherigen Ansprüche,
wobei der Spalt (28, 34) zwischen dem ersten und dem zweiten Ende (24, 26, 30, 32) des oberen bzw. unteren Metallrings im eingebauten Zustand eine umfangsmäßige Breite von 0,3 - 2,0 mm hat; und/oder
wobei der Verdrehsicherungsvorsprung (36, 38) an dem oberen bzw. Auflageabschnitt (20, 22) der Ölabstreifring-Feder (4) den Spalt (28, 34) zwischen dem ersten und dem zweiten Ende (24, 26, 30, 32) des oberen bzw. unteren Metallrings (6, 8) in umfangsmäßiger Breitenrichtung gesehen vollständig ausfüllt.

9. Ölabstreifring (2) nach einem der vorherigen Ansprüche,
wobei der obere und/oder der untere Metallring (6, 8) - in Umfangsrichtung gesehen - jeweils einen konstanten, vorsprungsfreien und vertiefungsfreien Querschnitt aufweisen.

## Claims

1. An oil scraper ring (2) for being mounted in an oil ring groove of a piston, comprising:
an oil scraper ring spring (4), said oil scraper ring spring (4) comprising:
a plurality of upper portions (10) and a plurality of lower portions (12) which are alternately arranged in a circumferential direction such that they are spaced in an axial direction;
connecting portions (14) each connecting the adjacent upper and lower portions (10, 12) to each other;
wherein each of the upper and lower portions (10, 12) has a nose section (16) which is arranged at the inner circumferential end and is designed to press a respective abutting upper or lower metal ring (6, 8) radially outwards, and has a support section (20, 22) which extends radially between the nose section (16) and the outer circumferential end and is designed to have the respective upper or lower metal ring (6, 8) resting or abutting thereon;
wherein an anti-rotation projection (36, 38) is provided on an upper and/or on a lower support section (20, 22), which extends upwards from the plane of the upper support section (20) and, respectively, downwards from the plane of the lower support section (22) and has a height (H) which is less than or equal to the distance of the upper end of the nose section (16) to the plane of the upper support section (20) and, respectively, less than or equal to the distance of the lower end of the nose section (16) to the plane of the lower support section (22), or less than or equal to the thickness (D) of the metal ring (6, 8) to be placed on the upper support section (20) and on the lower support section (22), respectively; and
wherein the anti-rotation projection (36, 38) is designed as at least one material section which is bent outwardly from the upper and lower support sections (20, 22), respectively, and optionally is partially stamped or cut out from the same;
an upper metal ring (6) which rests on the the support sections (20) of the upper portions (10) of the oil scraper ring spring (4) and the radial inner surface of which abuts the radial outer surfaces of the nose sections (16) of the upper portions of the oil scraper ring spring (4); and
a lower metal ring (8) which rests on the support sections (22) of the lower portions (12) of the oil scraper ring spring (4) and the radial inner surface of which abuts the radial outer surface of the nose sections (16) of the lower portions (12) of the oil scraper ring spring (4);
wherein at least one of the upper and lower metal rings (6, 8) has respective first and second ends (24, 26, 30, 32) that form a gap (28, 34) therebetween; and
wherein at least one of the upper and lower metal rings (6, 8) rests on or abuts the support sections (20, 22) in such a manner that the anti-rotation projection (36, 38) of the oil scraper ring spring (4) engages in the gap (28, 34) between the first and second ends (24, 26, 30, 32) of the metal ring (6, 8) and thus effects an anti-rotation protection between the oil scraper ring spring (4) and the metal ring (6, 8).

2. The oil scraper ring (2) according to claim 1,
wherein the height (H) of the anti-rotation projection is 25 to 100%, preferably 50 to 95%, of the distance of the upper end of the nose section (16) to the plane of the upper support section (20) and, respectively, of the distance of the lower end of the nose section (16) to the plane of the lower support section (22); or
wherein the height (H) of the anti-rotation projection is 30 to 100%, preferably 50 to 95%, of the thickness (D) of the metal ring (6, 8) to be placed on the upper support section (20) and on the lower support section (22), respectively.

3. The oil scraper ring (2) according to claim 1 or 2,
wherein the anti-rotation projection (36, 38) is arranged at a radially outer region of the support section (20, 22).

4. The oil scraper ring (2) according to any of the preceding claims,
wherein the anti-rotation projection (36, 38) extends perpendicularly to the support section (20, 22).

5. The oil scraper ring (2) according to any of the preceding claims,
wherein the radial width of the anti-rotation projection (36, 38) is 0.3 to 2.0 mm; and/or
wherein the circumferential width of the anti-rotation projection (36, 38) is 0.3 to 2.0 mm.

6. The oil scraper ring (2) according to any of the preceding claims,
wherein the anti-rotation projection (36) on the upper support section (20) of the oil scraper ring spring (4) engages in the gap (28) between the first and seconds end (24, 26) of the upper metal ring (6) and thus effects an anti-rotation protection between the oil scraper ring spring and the upper metal ring; and/or
wherein the anti-rotation projection (38) on the lower support section (22) of the oil scraper ring spring (4) engages in the gap (34) between the first and second ends (30, 32) of the lower metal ring (8) and thus effects an anti-rotation protection between the oil scraper ring spring (4) and the lower metal ring (8).

7. The oil scraper ring (2) according to claim 6,
wherein the anti-rotation projection (36) on the upper support section (20) is circumferentially offset from the anti-rotation projection (38) on the lower support section (22); and/or
wherein the angle between the anti-rotation projection (36) on the upper support section (20) and the anti-rotation projection (38) on the lower support section (22) is 10 to 180°.

8. The oil scraper ring (2) according to any of the preceding claims,
wherein the gap (28, 34) between the first and second ends (24, 26, 30, 32) of the upper and lower metal rings, respectively, in the installed state has a circumferential width of 0.3 to 2.0 mm; and/or
wherein the anti-rotation projection (36, 38) on the upper and lower support sections (20, 22), respectively, of the oil scraper ring spring (4) completely fills the gap (28, 34) between the first and second ends (24, 26, 30, 32) of the upper and lower metal rings (6, 8), respectively, as seen in the circumferential width direction.

9. The oil scraper ring (2) according to any of the preceding claims,
wherein the upper and/or the lower metal ring (6, 8) - as seen in the circumferential direction - each have a constant, projection-free and recess-free cross section.

## Revendications

1. Bague racleuse d'huile (2) destinée à être montée dans une rainure de bague d'huile d'un piston, comportant :
un ressort de bague racleuse d'huile (4), cependant que le ressort de bague racleuse d'huile (4) comporte ce qui suit :
plusieurs zones supérieures (10) et plusieurs zones inférieures (12) agencées alternativement dans une direction circonférentielle, de telle façon qu'elles ont un espacement dans une direction axiale ;
des zones de jonction (14) qui joignent respectivement entre elles les zones supérieures et inférieures (10, 12) avoisinantes ;
cependant que chacune des zones supérieures et inférieures (10, 12) comporte respectivement une partie de nez (16) qui est agencée à l'extrémité circonférentielle intérieure et est conçue pour presser radialement vers l'extérieur une bague métallique supérieure ou inférieure (6, 8) respectivement jointive, et une partie d'appui (20, 22) qui s'étend radialement entre la partie de nez (16) et l'extrémité circonférentielle extérieure et est conçue pour que la bague métallique supérieure ou inférieure (6, 8) respective soit en appui sur elle ou soit jointive avec elle ;
cependant que, à une partie d'appui supérieure et/ou inférieure (20, 22), une saillie de sécurité anti-rotation (36, 38) est prévue, laquelle s'étend vers le haut depuis le plan de la partie d'appui supérieure (20) ou vers le bas depuis le plan de la partie d'appui inférieure (22) et a une hauteur (H) inférieure ou égale à l'espacement de l'extrémité supérieure de la partie de nez (16) par rapport au plan de la partie d'appui supérieure (20), ou inférieure ou égale à l'espacement de l'extrémité inférieure de la partie de nez (16) par rapport au plan de la partie d'appui inférieure (22), ou inférieure ou égale à l'épaisseur (D) de la bague métallique (6, 8) à mettre en appui sur la partie d'appui supérieure (20) ou à placer sur la partie d'appui inférieure (22) ; et
cependant que la saillie de sécurité anti-rotation (36, 38) est réalisée sous forme d'au moins une partie de matériau recourbée et éventuellement partiellement poinçonné ou découpé à partir de la partie d'appui supérieure et/ou inférieure (20, 22) ;
une bague métallique supérieure (6) qui est en appui sur les parties d'appui (20) des zones supérieures (10) du ressort de bague racleuse d'huile (4) et dont la surface radiale intérieure est placée aux surfaces radiales extérieures des partie de nez (16) des zones supérieures du ressort de bague racleuse d'huile (4) ; et
une bague métallique inférieure (8) qui est placée aux parties d'appui (22) des zones inférieures (12) du ressort de bague racleuse d'huile (4) et dont la surface radiale intérieure est placée aux surfaces radiales extérieures des partie de nez (16) des zones inférieures (12) du ressort de bague racleuse d'huile (4) ;
cependant qu'au moins une de la bague métallique supérieure et inférieure (6, 8) comportent -respectivement une première et une deuxième extrémité (24, 26, 30, 32) qui forment une fente (28, 34) entre elles ; et
cependant qu'au moins une de la bague métallique supérieure et inférieure (6, 8) est de telle façon en appui ou placée sur les parties d'appui (20, 22) que la saillie de sécurité anti-rotation (36, 38) du ressort de bague racleuse d'huile (4) s'engage dans la fente (28, 34) entre la première et la deuxième extrémité (24, 26, 30, 32) de la bague métallique (6, 8) et engendre ainsi une sécurité anti-rotation entre le ressort de bague racleuse d'huile (4) et la bague métallique (6, 8).

2. Bague racleuse d'huile (2) selon la revendication 1,
cependant que la hauteur (H) de la saillie de sécurité anti-rotation est comprise entre 25 et 100 %, de préférence entre 50 et 95 % de l'espacement de l'extrémité supérieure de la partie de nez (16) par rapport au plan de la partie d'appui supérieure (20), ou de l'espacement de l'extrémité inférieure de la partie de nez (16) par rapport au plan de la partie d'appui inférieure (22) ; ou
cependant que la hauteur (H) de la saillie de sécurité anti-rotation est comprise entre 30 et 100 %, de préférence entre 50 et 95 % de l'épaisseur (D) de la bague métallique (6, 8) à mettre en appui sur la partie d'appui supérieure (20) ou à placer sur la partie d'appui inférieure (22).

3. Bague racleuse d'huile (2) selon la revendication 1 ou 2,
cependant que la saillie de sécurité anti-rotation (36, 38) est agencée à une zone radiale extérieure de la partie d'appui (20, 22).

4. Bague racleuse d'huile (2) selon une des revendications précédentes,
cependant que la saillie de sécurité anti-rotation (36, 38) s'étend perpendiculairement à la partie d'appui (20, 22).

5. Bague racleuse d'huile (2) selon une des revendications précédentes,
cependant que la largeur radiale de la saillie de sécurité anti-rotation (36, 38) est comprise entre 0,3 et 2,0 mm ; et/ou
cependant que la largeur circonférentielle de la saillie de sécurité anti-rotation (36, 38) est comprise entre 0,3 et 2,0 mm.

6. Bague racleuse d'huile (2) selon une des revendications précédentes,
cependant que la saillie de sécurité anti-rotation (36) s'engage, à la partie d'appui supérieure (20) du ressort de bague racleuse d'huile (4), dans la fente (28) entre la première et la deuxième extrémité (24, 26) de la bague métallique supérieure (6) et engendre ainsi une sécurité anti-rotation -entre le ressort de bague racleuse d'huile et la bague métallique supérieure ; et/ou
cependant que la saillie de sécurité anti-rotation (38) s'engage, à la partie d'appui inférieure (22) du ressort de bague racleuse d'huile (4), dans la fente (34) entre la première et la deuxième extrémité (30, 32) de la bague métallique inférieure (8) et engendre ainsi une sécurité anti-rotation entre le ressort de bague racleuse d'huile (4) et la bague métallique inférieure (8).

7. Bague racleuse d'huile (2) selon la revendication 6,
cependant que la saillie de sécurité anti-rotation (36) est agencée à la partie d'appui supérieure (20) de manière circonférentiellement décalée par rapport à la saillie de sécurité anti-rotation (38) à la partie d'appui inférieure (22) ; et/ou
cependant que l'angle entre la saillie de sécurité anti-rotation (36) à la partie d'appui supérieure (20) et la saillie de sécurité anti-rotation (38) à la partie d'appui inférieure (22) est compris entre 10 et 180°.

8. Bague racleuse d'huile (2) selon une des revendications précédentes,
cependant que la fente (28, 34)) entre la première et la deuxième extrémité (24, 26, 30, 32) de la bague métallique supérieure ou inférieure a, à l'état monté, une largeur circonférentielle comprise entre 0,3 et 2,0 mm ; et/ou
cependant que la saillie de sécurité anti-rotation (36, 38), à la partie d'appui supérieure ou inférieure (20, 22) du ressort de bague racleuse d'huile (4), vue dans la direction de la largeur circonférentielle, remplit entièrement la fente (28, 34) entre la première et la deuxième extrémité (24, 26, 30, 32) de la bague métallique supérieure ou inférieure (6, 8).

9. Bague racleuse d'huile (2) selon une des revendications précédentes,
cependant que la bague métallique supérieure et/ou inférieure (6, 8), vues dans la direction de la largeur circonférentielle, comportent respectivement une coupe transversale constante, sans saillie et sans renfoncement.
